# DEMANDE DE BREVET EUROPEEN

(11) **EP 2 479 669 A1**
(43) Date de publication de la demande: **25.07.2012**
(21) Numéro de dépôt: 11305066.0
(22) Date de dépôt: 24.01.2011
(51) Int. Cl.: G06F 9/54, H04L 29/06

(54) **Procédé et dispositif de médiation pour faire interagir des applications indépendantes au sein d'un réseau de communication**

(71) Demandeur: Alcatel Lucent, 75007 Paris (FR)
(72) Inventeur: Leygues, François, 91620 NOZAY (FR); Lebel, Christophe, 44708 ORVAULT (FR); Tombroff, Dimitri, 91300 MASSY (FR)
(74) Mandataire: Sciaux, Edmond

(57) **Abrégé**

Un procédé de médiation est destiné à être mis en oeuvre dans un réseau de communication comprenant des applications indépendantes (A1-A3) propres à effectuer des tâches pour délivrer des résultats selon des formats différents. Ce procédé consiste, lorsqu'au moins deux applications indépendantes (A1, A2) veulent participer à une session initiée par un terminal (T) d'un usager, à utiliser un protocole de médiation de type dit "Distributed Session Context" i) pour enregistrer au moins un identifiant de chacune de ces applications (A1, A2) en correspondance d'un identifiant de la session, ii) pour déterminer des règles d'adaptation propres à permettre l'utilisation par chacune de ces applications enregistrées (A1, A2) d'un résultat de tâche produit dans le cadre de la session par l'une des applications enregistrées (A1, A2), iii) pour générer un objet contexte partagé associé à l'identifiant de la session et pouvant être surveillé par chacune des applications enregistrées (A1, A2), et iv) chaque fois qu'une application enregistrée (A1, A2) produit un résultat de tâche, pour adapter ce résultat de tâche en fonction des règles d'adaptation avant de l'intégrer dans l'objet contexte pour qu'il puisse être utilisé par au moins une autre application enregistrée (A1, A2).

## Description

### Domaine technique

L'invention concerne les réseaux de communication qui mettent à la disposition d'usagers des applications indépendantes les unes des autres.

On entend ici par "applications indépendantes les unes des autres" des applications qui effectuent des tâches, éventuellement similaires, dans le cadre d'une session initiée par un terminal d'usager, et qui délivrent des résultats de tâche selon des formats (ou règles) différent(e)s, par exemple du fait de l'utilisation de protocoles de signalisation différents. On notera que de telles applications utilisent généralement un coeur de réseau, éventuellement de type IMS ("IP Multimedia Subsystem ").

### Etat de l'art

Comme le sait l'homme de l'art, lorsqu'un terminal d'usager initie une session, par exemple multimédia, il arrive fréquemment que cela nécessite l'intervention de plusieurs applications indépendantes. Chaque application impliquée dans une session doit alors effectuer au moins une tâche (ou une opération) afin de produire un résultat de tâche. Parfois, l'une des applications produit un résultat de tâche qui doit être utilisé par une autre application. Or, il arrive fréquemment que le format d'un résultat de tâche ne soit pas compréhensible par une application qui doit utiliser ce dernier. Cette situation survient généralement lorsque les applications n'utilisent pas le même protocole de signalisation.

Afin d'améliorer la situation, en présence d'applications utilisant des protocoles de signalisation différents mais présentant de nombreuses similitudes de fonctionnement et/ou utilisant des requêtes ou codes de réponse similaires, il a été proposé d'utiliser un équipement de réseau spécifique assurant une espèce de passerelle inter applications. C'est principalement le cas des équipements de réseau, appelés "Standardized Sip Servlet Application Router" et "HTTP proxylet container", qui assurent un service de médiation (ou "service brokering") entre les protocoles SIP ("Session Initiation Protocol") et HTTP ("HyperText Transfer Protocol"), dont on connaît les nombreuses similitudes de fonctionnement. Il est rappelé que les protocoles SIP et HTTP fonctionnent tous les deux par messagerie (échanges de requêtes et de messages de réponse prédéfinis) et gèrent des machines à état (ou "state machines").

### Résumé de l'invention

Il n'existe pas aujourd'hui de service de médiation permettant à une application utilisant n'importe quel protocole de signalisation (et donc produisant des résultats de tâche selon n'importe quel format) d'interagir avec une autre application qui utilise n'importe quel autre protocole de signalisation (et donc susceptible de produire des résultats de tâche selon n'importe quel format). Par conséquent, chaque fois que l'on doit faire interagir des applications indépendantes, on est obligé de construire un programme dédié destiné à transformer radicalement, par codage, chaque résultat de tâche produit par l'une de ces applications et transmis au moyen d'un premier protocole pour qu'il puisse être transmis à l'autre application selon un second protocole qu'elle connaît en vue d'une utilisation locale. On comprendra que cette solution nécessite que l'usager soit capable de définir un programme de conversion adapté, ce qui nécessite un niveau de connaissance très au dessus du niveau de l'usager moyen. En outre, cette solution induit un important ralentissement des traitements, puisque chaque message issu d'une application doit être converti en un autre message.

Par ailleurs, la plupart des protocoles existants n'offrent ni une haute disponibilité entre applications ni une haute mise à l'échelle, notamment du fait qu'ils doivent en permanence utiliser des informations qui sont stockées dans des bases de données (par exemple de session), dont le seul intérêt est d'offrir une garantie de recouvrement d'informations en cas de problème technique. Or, il est bien connu que l'accès à des bases de données est assez lent.

En outre, certains protocole de signalisation, comme par exemple SIP, s'avèrent (très) mal sécurisés et/ou ne conviennent que pour des applications qui sont impliquées dans des sessions multimédia.

L'invention a donc pour but d'améliorer la situation.

Selon un premier aspect, l'invention propose un procédé de médiation, destiné à être mis en oeuvre dans un réseau de communication comprenant des applications indépendantes propres à effectuer des tâches pour délivrer des résultats selon des formats différents, et consistant, lorsqu'au moins deux applications indépendantes veulent participer à une session initiée par un terminal d'un usager, à utiliser un protocole de médiation de type dit "Distributed Session Context" (ou DSC):
i) pour enregistrer au moins un identifiant de chacune de ces applications en correspondance d'un identifiant de la session,
ii) pour déterminer des règles d'adaptation propres à permettre l'utilisation par chacune des applications enregistrées d'un résultat de tâche produit dans le cadre de la session par l'une des applications enregistrées,
iii) pour générer un objet contexte partagé associé à l'identifiant de la session et pouvant être surveillé par chacune des applications enregistrées, et
iv) chaque fois qu'une application enregistrée produit un résultat de tâche, pour adapter ce résultat de tâche en fonction des règles d'adaptation déterminées, avant de l'intégrer dans l'objet contexte pour qu'il puisse être utilisé par au moins une autre application enregistrée.

Le procédé peut comporter d'autres caractéristiques qui peuvent être prises séparément ou en combinaison, et notamment :
- on peut utiliser le protocole de médiation DSC pour attribuer un identifiant à l'objet contexte, puis pour transmettre cet identifiant attribué aux différentes applications enregistrées afin qu'elles puissent surveiller cet identifiant de manière à détecter chaque modification survenue dans son contenu consécutivement à l'intégration d'un nouveau résultat de tâche adapté ou d'une nouvelle requête;
- on peut utiliser le protocole de médiation DSC pour générer l'objet contexte avec un tableau et pour stocker dans ce tableau chaque nouvelle requête issue du terminal et chaque nouveau résultat de tâche adapté. Dans ce cas, chaque nouveau stockage constitue une modification de l'objet contexte;
   ➢ on peut utiliser le protocole de médiation pour stocker dans le tableau chaque requête issue du terminal et chaque résultat de tâche adapté sous la forme d'une valeur d'un attribut;
- on peut utiliser le protocole de médiation pour enregistrer l'identifiant d'une application et un moyen pour joindre cette application en correspondance de l'identifiant de la session.

Selon un deuxième aspect, l'invention propose un dispositif de médiation, destiné à faire partie d'un réseau de communication comprenant des applications indépendantes propres à effectuer des tâches pour délivrer des résultats selon des formats différents, et agencé, lorsqu'au moins deux applications indépendantes doivent participer à une session initiée par un terminal d'un usager, pour utiliser un protocole de médiation de type dit "Distributed Session Context" (ou DSC):
- pour enregistrer au moins un identifiant de chacune de ces applications en correspondance d'un identifiant de cette session,
- pour déterminer des règles d'adaptation propres à permettre l'utilisation par chacune des applications enregistrées d'un résultat de tâche produit dans le cadre de la session par l'une des applications enregistrées,
- pour générer un objet contexte partagé associé à l'identifiant de la session et pouvant être surveillé par chacune des applications enregistrées, et
- chaque fois qu'une application enregistrée produit un résultat de tâche, pour adapter ce résultat de tâche en fonction des règles d'adaptation déterminées, avant de l'intégrer dans l'objet contexte, pour qu'il puisse être utilisé par au moins une autre application enregistrée.

Selon un troisième aspect, l'invention propose un serveur d'applications, destiné à faire partie d'un réseau de communication, et comprenant au moins deux applications indépendantes et un dispositif de médiation du type de celui présenté ci-avant et propre à faire interagir les applications indépendantes pendant une session, au moyen d'un protocole de médiation de type dit "Distributed Session Context" (DSC).

Un tel serveur peut, par exemple, comprendre un conteneur dédié au protocole de médiation DSC et couplé aux applications indépendantes et au dispositif de médiation.

### Brève description des dessins

D'autres caractéristiques et avantages de l'invention apparaîtront à l'examen de la description détaillée ci-après, et des dessins annexés, sur lesquels:
- la figure 1 illustre de façon très schématique et fonctionnelle un réseau de communication comportant un coeur de réseau équipé d'un serveur d'applications selon l'invention et couplé à un réseau d'accès auquel est couplé un terminal d'usager, et
- la figure 2 illustre de façon schématique un exemple d'enchaînement d'étapes résultant de la mise en oeuvre d'un procédé de médiation selon l'invention pendant une session de communication, initiée par un terminal d'usager et impliquant deux applications indépendantes d'un réseau de communication.

Les dessins annexés pourront non seulement servir à compléter l'invention, mais aussi contribuer à sa définition, le cas échéant.

### Description détaillée

L'invention a pour objet de permettre l'interaction entre des applications indépendantes (Ai), appartenant à au moins un réseau de communication, dans le cadre d'une session de communication initiée par un terminal (T) d'un usager.

Dans ce qui suit, on considère, à titre d'exemple purement illustratif, que le réseau de communication est un réseau non filaire de type WiMAX (IEEE 802.16). Mais, l'invention n'est pas limitée à ce type de réseau de communication. Elle concerne en effet tous les réseaux de communication de type filaire ou non filaire (ou radio) mettant à la disposition de leurs clients (usagers) des applications (Ai) et capables de transporter la couche de réseau IP. Par conséquent, il pourra également s'agir d'un réseau de type LTE ("Long Term Evolution"), UMTS, CDMA 2000, HSPA ou WLAN ("Wireless Local Area Network" - réseau local sans fil), par exemple.

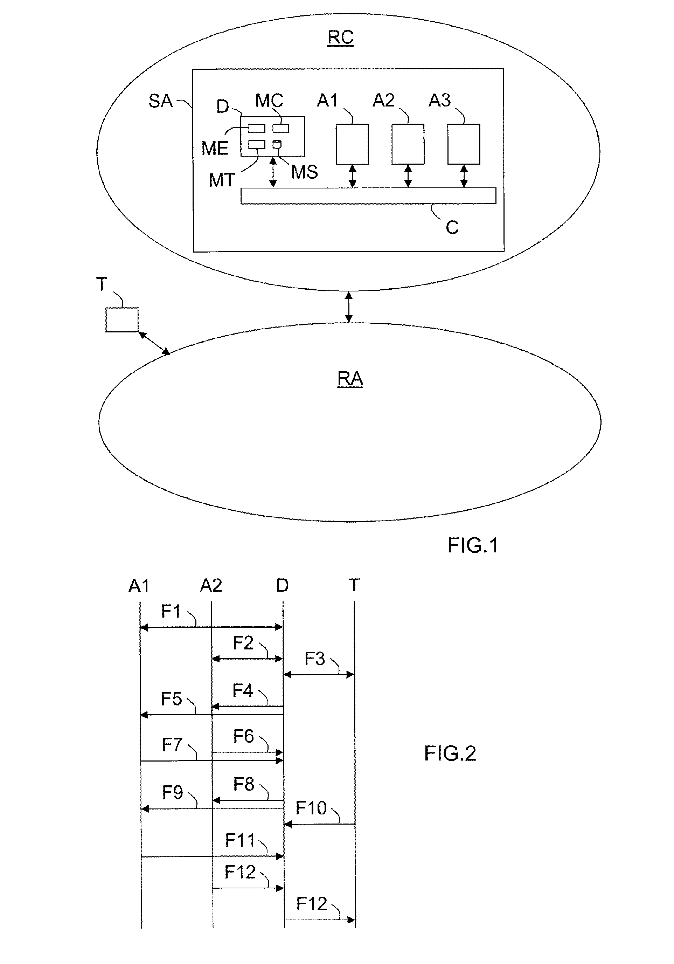

On a schématiquement illustré sur la figure 1 un réseau de communication (ici de type WiMAX). Un tel réseau peut être très schématiquement résumé à un réseau d'accès RA couplé à un coeur de réseau (ou "core network") RC.

Le réseau d'accès RA comprend tous les équipements de réseau permettant à un terminal T d'un usager d'établir une communication avec un équipement de réseau ou bien avec un autre terminal (ou équipement de communication).

Le coeur de réseau RC comprend notamment des applications Ai (ici i = 1 à 3, à titre d'exemple non limitatif) qui sont mises à la disposition des terminaux T des usagers clients (ou abonnés) et qui sont destinées à effectuer des tâches (ou opérations) dans le cadre de sessions initiées par les terminaux d'usagers T. A titre d'exemples non limitatifs, une application Ai peut être dédiée à la voix sur IP ("Voice over IP" - VoIP), à la vidéo sur IP, à la vente par correspondance, à la messagerie instantanée, à un jeu vidéo, à la diffusion de vidéo ou de films (et plus généralement de média (sous n'importe quelle forme)). D'une manière générale l'invention concerne toute application impliquant une activité en ligne pouvant nécessiter le maintien d'une session de communication.

On considère dans ce qui suit, à titre d'exemple non limitatif, que le réseau de coeur RC supporte une suite de protocoles IP (telle que TCP/IP). Mais, l'invention n'est pas limitée à ce type de suite de protocoles.

Par ailleurs, on considère dans ce qui suit, à titre d'exemple non limitatif, que toutes les applications Ai sont indépendantes les unes des autres, et donc qu'elles peuvent effectuer des tâches, éventuellement similaires, dans le cadre d'une session initiée par un terminal d'usager T, mais qu'elles délivrent des résultats de tâche selon des formats (ou règles) différent(e)s, par exemple du fait de l'utilisation de protocoles de signalisation différents. Mais, certaines applications faisant partie d'un même serveur d'applications peuvent éventuellement utiliser des protocoles identiques.

Comme illustré, les applications Ai peuvent faire partie d'un serveur d'applications SA implanté dans le coeur de réseau RC.

Selon l'invention, les différentes applications Ai peuvent utiliser un protocole de médiation de type dit "Distributed Session Context" (ou DSC) développé par la société Alcatel-Lucent. Ce protocole de médiation est utilisé par l'équipement qui est fabriqué par la société Alcatel-Lucent sous le nom MCAS et dont les principales caractéristiques techniques peuvent être obtenues à l'adresse Internet suivante : "http://www.alcatel-lucent.com/wps/portal/".

Il est ici simplement rappelé que le protocole DSC est un logiciel de type médiateur (ou "middleware"), destiné à créer un réseau d'échange entre différentes applications afin de permettre des communications entre ces dernières.

De préférence, et comme illustré sur la figure 1, le serveur d'applications SA comprend un conteneur (ou en anglais "container") C, couplé à ses applications indépendantes Ai et dédié au protocole DSC. Le conteneur DSC C constitue pour les applications Ai un environnement d'exécution qui est chargé de traiter des requêtes reçues et d'acheminer des messages destinés aux applications Al ou provenant de ces applications Ai. Il est généralement agencé sous la forme d'un programme principal à l'intérieur duquel sont déployés des composants logiciels (ou petits programmes) qui sont assez similaires (bien que non identiques) à des "servlets". En fait le protocole DSC est structuré comme une interface de programmation d'applications (ou API ("Application Programming Interface")).

L'invention propose de mettre en oeuvre un procédé de médiation au sein d'un serveur d'applications SA, de manière à permettre une interaction entre des applications indépendantes Ai. Un tel procédé peut par exemple être mis en oeuvre au moyen d'un dispositif de médiation D qui est préférentiellement implanté dans le serveur d'applications SA et qui est couplé au conteneur DSC C. On notera que le serveur d'applications dans lequel est implanté le dispositif de médiation D n'est pas obligatoirement celui qui contient les applications Ai que ce dispositif de médiation D est destiné à faire interagir.

Le procédé de médiation, selon l'invention, est mis en oeuvre (par le dispositif de médiation D) chaque fois qu'un terminal (d'usager) T initie une session en transmettant une requête d'ouverture de session. Cette requête est acheminée jusqu'au dispositif de médiation D (flèche F3 de la figure 2). Ce dernier (D) attribue alors à la nouvelle session un identifiant de session qu'il stocke dans un objet DSC en correspondance d'un identifiant du terminal T. Ensuite, le dispositif (de médiation) D signale aux différentes applications Ai de son serveur d'applications SA l'existence de cette nouvelle session. Pour ce faire, il leur transmet un message comportant l'identifiant de session au moyen du protocole DSC (flèches F4 et F5 de la figure 2). Cette dernière opération est rendue possible si les applications Ai se sont préalablement déclarées disponibles auprès du dispositif D (flèches F1 et F2 de la figure 2). On notera que le dispositif D est configuré, c'est à dire "programmé", par un administrateur de manière à effectuer une activation des applications Ai qui se sont préalablement déclarées et la mise en oeuvre des transformations (ou adaptations). La configuration comprend alors, au moins, une référence au nom de l'application Ai, et la déclaration de disponibilité comprend, au moins, l'adresse effective de l'application Ai.

Les phases décrites ci-avant constituent en effet des préalables qui sont connus de l'art antérieur, et qui peuvent être éventuellement considérés comme faisant partie d'une étape préliminaire du procédé selon l'invention.

Le procédé selon l'invention commence plus précisément lorsqu'au moins deux applications indépendantes Ai (par exemple A1 et A2) veulent participer à la session signalée par le dispositif D.

Selon le procédé, lorsque le dispositif D reçoit une requête d'enregistrement en provenance d'une application Ai (ici A1 ou A2) effectuée au moyen du protocole DSC ou de tout autre protocole de médiation (ou middleware) (flèches F6 et F7 de la figure 2), il enregistre au moins l'identifiant de cette application Ai en correspondance de l'identifiant de la session concerné, au moyen du protocole DSC ou de tout autre protocole de médiation (ou middleware) disposant d'un canal pour transmettre l'identifiant de la session. Pour ce faire, et comme illustré sur la figure 1, le dispositif D peut comporter un module d'enregistrement ME.

De préférence, le dispositif D enregistre également au moins un moyen permettant de joindre l'application Ai considérée en correspondance de l'identifiant de la session concerné. Ce moyen peut être, par exemple une adresse de communication.

Une fois que le dispositif D a effectué un enregistrement, il en informe l'application Ai en lui transmettant un message au moyen du protocole DSC ou de tout autre protocole de médiation (ou middleware) (flèches F8 et F9 de la figure 2).

Ensuite et toujours selon le procédé, le dispositif D détermine des règles d'adaptation qui sont propres à permettre l'utilisation par chacune des applications enregistrées Ai (ici A1 et A2) d'un résultat de tâche (ou d'opération) produit dans le cadre de la session considérée par l'une des applications enregistrées Ai. Pour ce faire, et comme illustré sur la figure 1, le dispositif D peut comporter un module de configuration MC.

Par exemple, le dispositif D peut stocker dans une mémoire (ou analogue) MS des "briques" génériques de base (ou mini programmes) définissant chacune une adaptation devant être appliquée à un résultat de tâche effectué par une application donnée Ai de manière à être compréhensible et donc utilisable par une autre application donnée Ai' (i' ≠i). A titre d'exemple non limitatif, une brique générique de base peut être destinée à transformer (ou convertir) une chaîne de caractères produite par une application Ai selon un premier format en une autre chaîne de caractères selon un second format ou bien une valeur numérique adaptée à une autre application Ai'.

Dans ce cas, le dispositif D constitue un ensemble de règles d'adaptation dédié aux applications Ai qui se sont enregistrées, en regroupant toutes les briques génériques de base qui les concernent conjointement.

On notera que le dispositif D peut également et éventuellement stocker dans la mémoire MS des programmes spécialisés, plus complexes que les briques génériques de base, et destinés à effectuer des traitements adaptatifs d'une complexité supérieure, comme par exemple un calcul d'optimisation sous contraintes, l'interrogation d'au moins une base de données extérieure, ou l'activation d'au moins un service varié dont le résultat sera utilisé pour compléter la transformation (ou adaptation).

Par exemple, le dispositif D stocke l'ensemble de règles d'adaptation dédié aux applications Ai, qui se sont enregistrées pour la session considérée, en correspondance de l'identifiant de cette session. Ce stockage peut, par exemple, se faire dans la mémoire MS ou dans une base de données particulière connectée (ou accessible) au dispositif D.

On notera qu'une adaptation peut être rendue propre à un utilisateur identifié d'une interaction entre applications Ai. Dans ce cas, une base de données "utilisateurs" est nécessaire, et la taille de cette dernière est proportionnelle au nombre d'utilisateurs, lequel peut être grand (éventuellement plusieurs millions).

On comprendra qu'un ensemble de règles d'adaptation permet de définir et configurer une liaison (ou un pont) virtuel entre chaque paire d'applications Ai enregistrées pour une session donnée.

Ensuite et toujours selon le procédé, le dispositif D génère un objet contexte partagé (ou commun) pour la session considérée au moyen du protocole DSC. Cet objet contexte partagé est associé à l'identifiant de la session considérée, ce qui lui permet d'être surveillé (ou observable) par chacune des applications Ai enregistrées pour cette session.

On entend ici par "objet contexte" un objet informatique défini par un identifiant et comportant un nombre variable d'attributs, éventuellement limite. Chaque attribut correspond à une requête ou à une tâche (ou opération) particulière. Par conséquent, chaque valeur d'attribut représente une requête particulière issue d'un terminal T participant à la session considérée ou bien un résultat particulier d'une tâche particulière effectuée par une application Ai enregistrée pour cette session considérée. On notera que l'objet contexte implémente une abstraction qui est fournie par le protocole DSC lui même.

Pour générer chaque objet contexte, et comme illustré sur la figure 1, le dispositif D peut comporter un module de traitement MT.

De préférence, le dispositif D attribue un identifiant à l'objet contexte partagé qu'il a généré, puis il transmet cet identifiant d'objet contexte attribué à chacune des applications Ai (ici A1 et A2) enregistrées pour la session qui est concernée par cet objet contexte (flèches F6 et F7 de la figure 2). Ainsi, les applications Ai peuvent surveiller l'objet contexte qui est associé à cet identifiant de manière à détecter chaque éventuelle modification survenue dans son contenu consécutivement à l'intégration d'un nouveau résultat de tâche, éventuellement adapté, ou d'une nouvelle requête.

Il est important de noter que le dispositif D peut soit adapter un résultat de tâche avant de l'intégrer dans un objet contexte, soit intégrer un résultat de tâche dans un objet contexte sans l'adapter. Dans ce dernier cas l'adaptation d'un résultat de recherche intégré dans un objet contexte se fait lorsqu'une application Ai veut utiliser ce résultat de recherche.

On notera que le dispositif D peut utiliser le protocole DSC pour générer chaque objet contexte avec un tableau informatique. Dans ce cas, le dispositif D stocke dans le tableau associé à un objet contexte, en tant que nouvelle valeur d'attribut, chaque nouvelle requête issue d'un terminal T participant à la session considérée et chaque nouveau résultat de tâche éventuellement adapté. Ainsi, chaque nouveau stockage survenant dans le tableau associé à un objet contexte constitue une modification de cet objet contexte qui peut être détectée par une application Ai qui est autorisée à surveiller ce dernier.

Ce mode d'accès aux informations relatives à une session est particulièrement bien sécurisé. En effet, seules les applications Ai qui sont enregistrées pour une session peuvent accéder aux informations relatives à cette session du fait qu'elles disposent de l'identifiant de l'objet contexte associé à cette session. En outre, la sécurisation contre les pannes peut être assurée par une réplication des objets contexte par le protocole DSC. Cette réplication peut avoir lieu dans un programme qui tourne dans une machine de secours, de sorte que les informations de contexte puissent survivre à une panne d'une première machine (il y a en effet "reprise" des traitements sur la machine de secours en cas de problème).

Chaque fois que le dispositif D reçoit une requête d'un terminal T, participant à une session ayant fait l'objet d'une association à un objet contexte, il intègre cette requête dans cet objet contexte afin que chaque application Ai enregistrée pour cette session puisse s'en apercevoir grâce à l'observation de cet objet contexte dont elle connaît l'identifiant. Une telle transmission de requête est matérialisée par la flèche F10 de la figure 2.

Ensuite et toujours selon le procédé, chaque fois qu'une application enregistrée Ai va produire un résultat de tâche pour une session donnée (par exemple pour satisfaire à une requête issue d'un terminal T ou d'une autre application Ai'), elle le transmet au dispositif D, avec le protocole DSC (flèches F11 et F12 de la figure 2). Puis, le dispositif D va éventuellement adapter ce résultat de tâche en fonction des règles d'adaptation qu'il a préalablement générées, avant de l'intégrer dans l'objet contexte associé à cette session, de sorte que ce résultat de tâche adapté puisse être utilisé par au moins une autre application enregistrée Ai' et/ou par un terminal T participant à la session considérée (flèche F13 de la figure 2).

On comprendra que lorsqu'une application s'aperçoit qu'un objet contexte qu'elle surveille a été modifié par le module de traitement MT du dispositif D, et que cette modification la concerne, alors elle lit la valeur de l'attribut qui a été nouvellement intégré dans cet objet contexte afin de l'utiliser pour ses propres besoins et ainsi pouvoir produire à son tour un nouveau résultat de tâche qui pourra à son tour être intégré dans l'objet contexte après adaptation par le module de traitement MT du dispositif D. On notera que si le dispositif D a stocké la valeur de l'attribut sans adapter le résultat de tâche qu'elle représente, alors lorsqu'une application enregistrée Ai veut utiliser cette valeur d'attribut, le dispositif D doit procéder à son adaptation dans un format compréhensible par cette application enregistrée Ai.

On notera également qu'une application enregistrée Ai signale qu'elle veut lire un attribut particulier d'un objet contexte en déclarant un "listener" sur cet attribut particulier. Il s'agit d'une fonction (et d'un contexte) de l'application qui est activée lorsque l'attribut est modifié.

Le dispositif D agit donc comme in orchestrateur au sein de son serveur d'applications SA.

Ce mode d'interaction entre applications indépendantes Ai, participant à une même session, est particulièrement avantageux en raison de sa rapidité et de sa sûreté.

On notera qu'à la fin d'une session le dispositif D supprime l'objet contexte associé.

On notera également qu'un dispositif de médiation D est préférentiellement réalisé sous la forme de modules logiciels (ou informatiques). Mais, il peut être également réalisé sous la forme d'une combinaison de circuits électroniques et de modules logiciels.

L'invention ne se limite pas aux modes de réalisation de procédé de médiation, de dispositif de médiation et de serveur d'applications décrits ci-avant, seulement à titre d'exemple, mais elle englobe toutes les variantes que pourra envisager l'homme de l'art dans le cadre des revendications ci-après.

## Revendications

1. Procédé de médiation pour un réseau de communication comprenant des applications indépendantes (Ai) propres à effectuer des tâches pour délivrer des résultats selon des formats différents, ledit procédé consistant, lorsqu'au moins deux applications indépendantes (Ai) veulent participer à une session initiée par un terminal (T) d'un usager, à utiliser un protocole de médiation de type dit "Distributed Session Context" i) pour enregistrer au moins un identifiant de chacune de ces applications (Ai) en correspondance d'un identifiant de ladite session, ii) pour déterminer des règles d'adaptation propres à permettre l'utilisation par chacune desdites applications enregistrées (Ai) d'un résultat de tâche produit dans le cadre de ladite session par l'une desdites applications enregistrées (Ai), iii) pour générer un objet contexte partagé associé audit identifiant de la session et pouvant être surveillé par chacune desdites applications enregistrées (Ai), et iv) chaque fois qu'une application enregistrée (Ai) produit un résultat de tâche, pour adapter ce résultat de tâche en fonction desdites règles d'adaptation avant de l'intégrer dans ledit objet contexte pour qu'il puisse être utilisé par au moins une autre application enregistrée (Ai').

2. Procédé selon la revendication 1, dans lequel on utilise ledit protocole de médiation pour attribuer un identifiant audit objet contexte, puis pour transmettre cet identifiant attribué auxdites applications enregistrées (Ai) afin qu'elles puissent surveiller cet identifiant de manière à détecter chaque modification survenue dans son contenu consécutivement à l'intégration d'un nouveau résultat de tâche adapté ou d'une nouvelle requête.

3. Procédé selon l'une des revendications 1 et 2, dans lequel on utilise ledit protocole de médiation pour générer ledit objet contexte avec un tableau et pour stocker dans ledit tableau chaque nouvelle requête issue dudit terminal (T) et chaque nouveau résultat de tâche adapté, chaque nouveau stockage constituant une modification dudit objet contexte.

4. Procédé selon la revendication 3, dans lequel on utilise ledit protocole de médiation pour stocker dans ledit tableau chaque requête issue dudit terminal (T) et chaque résultat de tâche adapté sous la forme d'une valeur d'un attribut.

5. Procédé selon l'une des revendications 1 à 4, dans lequel on utilise ledit protocole de médiation pour enregistrer l'identifiant d'une application (Ai) et un moyen pour joindre cette application (Ai) en correspondance d'un identifiant de ladite session.

6. Dispositif de médiation (D) pour un réseau de communication comprenant des applications indépendantes (Ai) propres à effectuer des tâches pour délivrer des résultats selon des formats différents, ledit dispositif (D) étant agencé, lorsqu'au moins deux applications indépendantes (Ai) doivent participer à une session initiée par un terminal (T) d'un usager, pour utiliser un protocole de médiation de type dit "Distributed Session Context" i) pour enregistrer au moins un identifiant de chacune de ces applications (Ai) en correspondance d'un identifiant de ladite session, ii) pour déterminer des règles d'adaptation propres à permettre l'utilisation par chacune desdites applications enregistrées (Ai) d'un résultat de tâche produit dans le cadre de ladite session par l'une desdites applications enregistrées (Ai), iii) pour générer un objet contexte partagé associé audit identifiant de la session et pouvant être surveillé par chacune desdites applications enregistrées (Ai), et iv) chaque fois qu'une application enregistrée (Ai) produit un résultat de tâche, pour adapter ce résultat de tâche en fonction desdites règles d'adaptation avant de l'intégrer dans ledit objet contexte pour qu'il puisse être utilisé par au moins une autre application enregistrée (Ai').

7. Serveur d'applications (SA) pour un réseau de communication, comprenant au moins deux applications indépendantes (Ai) et un dispositif de médiation (D) selon la revendication 6, propre à faire interagir certaines au moins desdites applications (Ai) pendant une session au moyen d'un protocole de médiation de type dit "Distributed Session Context".

8. Serveur selon la revendication 7, comprenant un conteneur (C) dédié audit protocole de médiation et couplé auxdites applications indépendantes (Ai) et audit dispositif de médiation (D).
